Europäisches Patentamt

European Patent Office

Office européen des brevets

(19)

(11) **EP 0 920 362 B1**

(12) **FASCICULE DE BREVET EUROPEEN**

(45) Date de publication et mention
de la délivrance du brevet:
**14.05.2003 Bulletin 2003/20**

(21) Numéro de dépôt: **97952088.9**

(22) Date de dépôt: **17.12.1997**

(51) Int Cl.⁷: **B23K 1/008**, G05D 11/13

(86) Numéro de dépôt international:
**PCT/FR97/02330**

(87) Numéro de publication internationale:
**WO 98/028102 (02.07.1998 Gazette 1998/26)**

(54) **PROCEDE D'ALIMENTATION EN GAZ D'UNE ENCEINTE ET METHODE DE REGULATION DE LA TENEUR EN UN ELEMENT DONNE DE L'ATMOSPHERE D'UNE TELLE ENCEINTE**

GASVERSORGUNGSVERFAHREN FÜR EIN GEHÄUSE UND VERFAHREN ZUR REGELUNG DES GEHALTES EINES BESTIMMTEN ELEMENTS IN DER ATMOSPHÄRE EINES SOLCHEN GEHÄUSES

METHOD FOR SUPPLYING GAS TO A CHAMBER AND METHOD FOR REGULATING THE CONTENT OF A GIVEN ELEMENT IN THE ATMOSPHERE OF SUCH A CHAMBER

(84) Etats contractants désignés:
**BE CH DE DK ES FR GB GR IT LI NL PT SE**

(30) Priorité: **20.12.1996 FR 9615785**

(43) Date de publication de la demande:
**09.06.1999 Bulletin 1999/23**

(73) Titulaire: **L'air Liquide, S.A. à Directoire et Conseil de Surveillance pour l'Etude et l'Exploitation des Procédés Georges Claude
75321 Paris Cedex 07 (FR)**

(72) Inventeurs:
• **LETURMY, Marc
F-78940 La Queue-les-Yvelines (FR)**
• **PIOGER, Frédéric
F-92370 Chaville (FR)**

(74) Mandataire: **Mellul-Bendelac, Sylvie Lisette
L'Air Liquide,
Service Propriété Industrielle,
75, Quai d'Orsay
75321 Paris Cedex 07 (FR)**

(56) Documents cités:
WO-A-96/04095 US-A- 5 296 680
US-A- 5 440 101

• **PATENT ABSTRACTS OF JAPAN vol. 095, no. 003, 28 avril 1995 & JP 06 344176 A (TAMURA SEISAKUSHO CO LTD), 20 décembre 1994,**

**Description**

La présente invention concerne le domaine des tunnels ou enceintes, alimentés en gaz pour effectuer des opérations sous atmosphère, telles que par exemple des opérations de traitement thermique, de brasage, de conditionnement de produits alimentaires, ou encore de refroidissement à l'aide de gaz froids.

La présente invention concerne :

- une méthode de régulation de la teneur en un élément donné de l'atmosphère d'une enceinte;
- un procédé d'alimentation en gaz d'une enceinte, mettant en oeuvre cette méthode de régulation;
- l'application de cette méthode et de ce procédé aux cas de fours de traitement thermique ou de fours de brasage, ou encore de fours ou machines de brasage/étamage de composants électroniques, ou bien d'enceintes de conditionnement ou de refroidissement de produits alimentaires.

A titre illustratif, de tels "tunnels" ou "enceintes" pourront ainsi par exemple être constitués de fours de traitement thermique, de fours de brasage, de four de brasage par refusion de composants électroniques sur circuit, ou encore de machines de brasage/étamage à la vague de composants électroniques, que ces machines soient conçues comme des tunnels totalement étanches sur toute leur longueur ou encore qu'elles soient munies de systèmes de capotage s'étendant audessus du bain de soudure ou plus ou moins largement autour de ce bain de soudure pour englober, par exemple, la zone de préchauffage.

Deux problématiques sont, le plus souvent, soulevées par les utilisateurs de telles installations :

1) l'instabilité de l'atmosphère mise en oeuvre :

On peut citer ici l'exemple très répandu d'applications où l'utilisateur va rechercher la stabilité de la teneur résiduelle en oxygène des atmosphères à base d'azote qu'il met en oeuvre dans ses enceintes.

Cette problématique de stabilité de l'atmosphère mise en oeuvre est bien entendu étroitement liée à la recherche par l'utilisateur d'une excellente reproductibilité de la qualité des pièces ou produits traités dans l'enceinte considérée.

Toujours à titre illustratif, des variations de qualité des pièces traitées dans l'enceinte peuvent par exemple être liées, dans le cas des atmosphères de type inerte, à l'oxydabilité de l'atmosphère (donc au niveau de l'oxygène résiduel ou autre gaz oxydant dans cette atmosphère), ou encore aux instabilités du transfert thermique mis en oeuvre dans l'enceinte, du fait d'instabilités constatées sur l'atmosphère mise en oeuvre, qu'il s'agisse d'une instabilité en termes de composition ou en termes de débits de gaz.

Les instabilités constatées sur l'atmosphère sont le plus généralement reliées à la cadence de production de l'enceinte, ou encore aux conditions extérieure environnant le four, par exemple à d'éventuels courants d'air.

On peut citer dans cette première problématique, le cas des fours de brasage par refusion de composants électroniques sur circuits, fours dit "convectifs", réalisant donc le transfert thermique nécessaire au brasage de la pièce selon un mode essentiellement convectif, en brassant de très gros débits de gaz dans chaque zone du four.

On sait en effet qu'au moins une partie des zones de tels fours convectifs (notamment les zones chaudes) fonctionnent avec un système de recirculation de gaz (recyclage). Dans ces zones en recirculation, seul un « relativement faible » débit est régulièrement ajouté, pour compenser les pertes de gaz intervenant, notamment via les cheminées d'extraction ou encore les entrée/sortie du four.

Ces fours de refusion par convection se caractérisent donc d'une part, par de très fortes consommations de gaz, mais également d'autre part, par les grandes difficultés rencontrées par les utilisateurs pour régler ces fours, toute modification du débit de gaz au niveau de certaines des zones du four entraînant des répercussions considérables sur l'équilibre de répartition des mouvements de gaz dans le four (turbulences) et sur le profil thermique existant (donc nécessairement sur la qualité des pièces produites).

Les travaux menés à bien par la Demanderesse sur ce sujet montrent en effet que le réglage de ces fours, pour être performant et représentatif des conditions ultérieures de fonctionnement, doit s'effectuer en phase de production. On est alors amené à devoir modifier manuellement le débit alimentant de façon sélective telle ou telle zone du four ce qui entraîne des variations considérables de débit dans les autres zones du four obligeant à faire des réajustements manuels zone par zone.

Pour illustrer ces considérations, prenons ainsi l'exemple du réglage d'un tel four convectif, alimenté globalement par un débit de 50 Nm$^3$/h d'azote, réglage effectué par exemple de façon très précise et stable à l'aide d'un régulateur de débit massique présent en amont de l'installation (en amont de l'ensemble des lignes qui desservent toutes les zones du four). S'il est nécessaire de faire chuter, en phase de réglage, le débit d'une des zones, par exemple de 20 Nm$^3$/h à 5 Nm$^3$/h, le régulateur continuera à alimenter le four avec un débit global de 50 Nm$^3$/h, et donc en répartissant l'excédant de 15 Nm$^3$/h sur l'ensemble des autres lignes. On le constate donc le débit au niveau des autres zones sera irrémédiablement modifié, modifiant ainsi également le transfert thermique qui s'y produit, et donc la qualité globale des pièces produites (rappelons que le four est nécessairement réglé en production c'est à dire en charge).

2) Les économies de gaz :

Certaines des installations citées sont donc très consommatrices de gaz, et c'est alors une préoccupation constante parmi les utilisateurs de chercher à diminuer les débits mis en oeuvre dans l'enceinte, c'est à dire de trouver le meilleur compromis débit de gaz mis en oeuvre / qualité des pièces produites.

Parmi les pistes généralement retenues pour effectuer de telles économies de consommation de gaz, on trouve le fait d'abaisser les débits de gaz mis en oeuvre en fonction de la cadence de production des pièces (gérer par exemple les interruptions de production) ou encore, le fait d'optimiser la composition d'atmosphère mise en oeuvre, par exemple, la teneur résiduelle en oxygène tolérée dans l'atmosphère de l'enceinte en fonction des caractéristiques des pièces traitées dans cette enceinte (par exemple, niveau d'oxydabilité des métaux traités).

En considérant l'exemple des atmosphères à base d'azote, à teneur contrôlée en oxygène, une des solutions existantes se proposant d'apporter une réponse à ces problématiques peut être qualifiée de solution de « contrôle d'atmosphère par régulation de débit ».

Selon cette solution, on met en oeuvre un certain réglage (débit et répartition des injections de gaz dans l'enceinte) et une source choisie d'azote de pureté en oxygène donnée, suffisamment limites pour qu'il existe effectivement des variations ou perturbations dans le fonctionnement de l'enceinte qui puissent engendrer dans l'atmosphère de cette enceinte un dépassement de la teneur résiduelle en oxygène maximale admissible.

La source de gaz choisie est alors utilisée en combinaison avec un système de régulation permettant, lorsque la teneur en oxygène résiduel mesurée dans l'atmosphère de l'enceinte dépasse un seuil donné, du fait des variations ou perturbations ci-dessus évoquées, d'augmenter le débit global de gaz dans l'enceinte, pour ne diminuer ce débit que lorsque la teneur en oxygène mesurée dans l'atmosphère de l'enceinte est repassée en dessous du seuil.

Cette solution permet certes d'adapter la pureté de la source de gaz utilisé et le débit mis en oeuvre, au besoins réels de l'opération pratiquée dans l'enceinte, mais peut entraîner en définitive, une consommation totale en gaz relativement élevée. Comme signalé plus haut, la Demanderesse a pu constater de plus, en pratique, le fait que certaines installations comme les fours de brasage par refusion du type convectif sont très difficiles à régler en débit, les variations du débit mis en oeuvre dans certaines zones du four, telles que classiquement dans la zone clé du pic de refusion de telles opérations de brasage, entraînent des variations considérables dans les autres zones du four, et donc globalement des phénomènes d'instabilité du procédé lui même :

-   les variations de débit sont d'une part, source de turbulences favorisant la création d'entrées d'air dans l'enceinte (modification de l'équilibre des mouvements de gaz), et donc une dégradation de la qualité de l'atmosphère de cette enceinte ;
-   comme décrit précédemment, une variation du transfert thermique convectif réalisé à l'intérieur de l'enceinte, donc de la qualité des produits brasés obtenus à la sortie de cette enceinte.

La présente invention se propose de fournir un procédé d'alimentation en gaz d'une enceinte, et une méthode de régulation de la teneur en un élément donné de l'atmosphère de cette enceinte, permettant de remédier aux différents problèmes techniques ci-dessus soulevés.

La méthode de régulation de la teneur en un élément donné de l'atmosphère d'une enceinte selon l'invention, l'enceinte étant alimentée par un réseau d'alimentation comportant au moins une ligne primaire reliée en sa partie amont à une source du gaz, et au moins deux lignes secondaires respectives (de la dite ligne primaire), connectées en leur partie amont à la ligne primaire et débouchant en leur partie aval à l'intérieur de l'enceinte, les lignes primaires provenant toutes d'un noeud amont lui-même alimenté en gaz par une conduite d'amenée, se caractérise alors par la mise en oeuvre des étapes suivantes :

a) on mesure la teneur, en l'élément donné, de l'atmosphère de l'enceinte, en au moins un point de l'enceinte ;

b) on effectue une comparaison avec au moins une valeur de consigne déterminée pour la teneur en ledit élément de l'atmosphère de l'enceinte en le dit point;

c) on fait varier, le cas échéant, selon le résultat de cette comparaison, la pression du gaz au niveau d'un des points du réseau, préférentiellement un des points suivants :

i) sur la ou une des lignes primaires, en amont du point de connexion de la première ligne secondaire respective sur la ligne primaire considérée ;

j) sur la ou une des lignes primaires, entre les deux points de connexion de deux des lignes secondaires, sur la ligne primaire considérée ;

k) sur la conduite d'amenée, en amont du noeud amont.

Comme il apparaîtra clairement à l'homme du métier à la lecture de ce qui précède, la méthode de régulation selon l'invention permet donc de contrôler de façon sélective, par la pression, le débit de gaz alimentant toute ou partie seulement de l'enceinte, les variations de pression (donc de débit) induites sur la portion considérée du réseau étant alors strictement sans conséquences sur le reste du réseau, donc sur le reste de l'enceinte.

Selon un premier mode de mise en oeuvre de l'invention, on effectue l'étape c) de variation de la pression en le point choisi du réseau de la façon suivante :

c1) on dispose au point considéré du réseau, une électrovanne à commande proportionnelle;

c2) on mesure la pression du gaz au voisinage de ce point, en aval de l'électrovanne ;

c3) on transmet la mesure de la teneur en l'élément donné, acquise durant l'étape a), vers une unité d'acquisition et de traitement d'informations, apte, en fonction de cette mesure de teneur, et de la comparaison effectuée durant l'étape b), à générer une consigne de pression Cp ;

c4) on transmet cette consigne de pression Cp à un moyen, apte à effectuer une comparaison entre la mesure de pression de l'étape c2) et la consigne Cp, et à modifier, en conséquence, le taux d'ouverture de l'électrovanne pour ramener, si nécessaire, ladite pression au niveau de la consigne Cp.

On pourra, par exemple, mettre en oeuvre un tel mode de réalisation en utilisant, à titre d'unité d'acquisition et de traitement d'information, un système plus ou moins sophistiqué (en terme d'intelligence artificielle), typiquement un régulateur, et à titre de moyen d'action, sur l'électrovanne proportionnelle, une carte électronique, les « transferts » (par exemple : transfert d'une mesure de teneur) et « transmissions » d'informations et rétroactions entre les différents moyens du système selon l'invention se faisant par tous moyens connus de l'homme du métier tels que transfert de signaux 4-20mA, transfert de signaux 0-10V, transfert d'un signal logique informatique etc...

Comme il apparaîtra clairement à l'homme du métier, Unité d'acquisition et Moyen d'action sur l'électrovanne peuvent également être rassemblés au sein d'une unique entité.

On conçoit que l'unité d'acquisition et de traitement d'information, qui est apte à générer une consigne de pression Cp, le fait suivant un algorithme mathématique prédéveloppé, s'adaptant à la situation à gérer, en fonction notamment du type d'enceinte considérée, du type d'opération pratiquée à l'intérieur de l'enceinte, du type de production traitée, mais également de la composition d'atmosphère manipulée.

A titre purement illustratif, un tel algorithme peut être selon le cas considéré basé sur un PID, sur une logique à seuils, ou encore sur un autre type de logique telle que la logique floue.

La nouvelle consigne de pression redéfinie par l'unité, permet alors de rétablir la teneur en l'élément définie dans l'atmosphère de l'enceinte au niveau de la consigne de teneur souhaitée.

La carte électronique, à réception de la mesure de pression d'une part, et de la consigne de pression modifiée par le régulateur d'autre part, est apte, à nouveau selon un algorithme qui lui est propre (par exemple, du type PID), à modifier le taux d'ouverture de l'électrovanne pour rétablir le niveau de pression requis en aval de l'électrovanne.

On peut donc qualifier ce premier mode de réalisation de mode de « régulation en pression » du fonctionnement de l'enceinte, par le fait qu'il effectue une régulation de la teneur de l'élément considéré, par action sur la pression d'alimentation du four.

Selon un autre mode de mise en oeuvre de l'invention, on effectue l'étape c) de variation de la pression en le point considéré du réseau de la façon suivante :

c1) la ligne du réseau où se trouve le point considéré, qu'il s'agisse d'une ligne primaire ou d'une conduite d'amenée, se subdivise au niveau du point considéré du réseau où l'on fait varier la pression en au moins trois lignes de dérivation, chacune de ces lignes de dérivation étant équipée d'une électrovanne et d'un détendeur situé en aval de l'électrovanne, l'aval de chacune des lignes de dérivation étant connecté, à nouveau, à la ligne considérée du réseau ;

c2) on prérègle chacun des trois détendeurs à un niveau de pression déterminé ;

c3) on transmet la mesure de la teneur en l'élément donné, acquise durant l'étape a), vers une unité d'acquisition et de traitement d'informations, apte, en fonction de la teneur mesurée, et de la comparaison effectuée durant l'étape b), à ouvrir sélectivement une des électrovannes, pour permettre le passage du gaz uniquement dans la ligne de dérivation dont l'électrovanne a été ouverte.

Le niveau « prédéterminé » de pression dans chaque ligne est préférentiellement déterminé expérimentalement en conditions réelles de fonctionnement.

L'unité d'acquisition et de traitement d'information pourra ici encore être constituée d'un système plus ou moins sophistiqué, qu'il s'agisse par exemple d'un automate programmable, d'un système de relais de seuils (déclenchant des contacts secs) ou encore d'un ordinateur du type PC.

La remarque effectuée plus haut concernant les « transferts » ou « transmissions » d'informations ou autres rétroactions selon l'invention s'applique également à ce deuxième mode de réalisation de l'invention.

On conçoit à la lecture de ce qui précède que ce dernier mode de réalisation permet de façon très avantageuse, de faire varier la pression d'alimentation en gaz, sur toute ou partie du réseau, selon trois niveaux discrets prédéfinis. On peut alors qualifier ce mode de mise en oeuvre de l'invention de « régulation à niveau de seuils » (régulation de la teneur de l'élément considéré, par action sur la pression d'alimentation du four selon des seuils prédéterminés).

Selon ce mode de réalisation, les électrovannes pourront être indifféremment en position « normalement ouvertes » ou « normalement fermées », l'unité s'adaptant à la configuration choisie pour mettre en service (donc rendre passante) la ligne choisie. Ainsi à titre illustratif, dans le cas de vannes « normalement fermées », les signaux envoyés par l'unité ouvriront l'électrovanne de la ligne que l'on souhaite à ce moment précis passante, autoriseront la fermeture de la voie qui était précédemment en service, l'électrovan de la troisième ligne étant naturellement hors service puisque « normalement fermée».

A titre illustratif, on pourra mettre en oeuvre les niveaux de pression suivants :

- dans une première ligne de dérivation, un détendeur préréglé à un premier niveau de pression $P_v$ correspondant à un débit d'alimentation en gaz, en aval du détendeur, que l'on peut qualifier de débit de « veille » $Q_v$;
- dans une seconde ligne de dérivation, un détendeur préréglé à un niveau de pression $P_{prod}$ correspondant à un débit de gaz, en aval du détendeur, que l'on peut qualifier de débit de « production » $Q_{prod}$;
- dans la troisième ligne de dérivation, un détendeur préréglé à une pression $P_{cond}$ correspondant à un débit d'alimentation en gaz, en aval du détendeur, que l'on peut qualifier de débit de « conditionnement » (ou de débit « turbo ») $Q_{cond}$;.

Les trois débits se situant respectivement de la façon suivante : $Q_v < Q_{prod} < Q_{cond}$.

Une telle méthode de régulation pourra alors être utilisée en alimentant l'enceinte par exemple de la façon suivante :

- lorsque l'on démarre l'enceinte (qu'il s'agisse, par exemple, d'un four de traitement thermique, ou encore d'un four ou d'une machine de brasage/étamage de composants électroniques), on procède à une première phase de conditionnement au cours de laquelle on alimente l'enceinte en gaz, la ligne de dérivation « conditionnement » étant en service (les autres lignes de dérivation étant donc fermées).

On maintient cette première phase de conditionnement de l'enceinte durant un temps prédéfini $t_{cond}$, qui peut varier par exemple de quelques minutes à quelques dizaines de minutes selon l'application considérée.

On conçoit que durant cette première phase de conditionnement, on préférera interdire l'entrée de l'enceinte à tout produit à traiter, l'enceinte n'étant pas encore prête pour réaliser l'opération en question (selon des critères préalablement établis).

De même, durant cette première phase de conditionnement, on préférera dans de nombreux cas éviter d'effectuer des mesures de la teneur de l'atmosphère de l'enceinte en l'élément considéré recherché, l'atmosphère étant encore en phase de conditionnement, on préférera alors laisser l'analyseur (nécessaire pour effectuer la mesure) sur purge (par exemple, sur purge azote). Ces précautions pour protéger l'analyseur dépendront, on le conçoit, largement de la technologie d'analyseur utilisée.

- après avoir dépassé le temps de conditionnement prédéfinie $t_{cond}$, on est alors prêt à autoriser l'entrée des produits à traiter, et à démarrer la mesure de la teneur en l'élément considéré dans l'atmosphère de l'enceinte.

On est alors dans une seconde phase que l'on peut qualifier de « veille », où l'unité d'acquisition et de traitement d'informations ferme l'électrovanne de la ligne de dérivation de « conditionnement » pour ouvrir l'électrovanne de la ligne de dérivation de « veille » dont le détendeur est préréglé à un niveau de pression correspondant au débit d'alimentation que l'on a prédéfini comme étant un débit de veille $Q_v$.

- dès qu'une pièce ou produit à traiter est détectée (par exemple, par une cellule de détection) à l'entrée de l'enceinte (c'est à dire plus ou moins loin en amont sur le convoyeur d'amenée des pièces à l'entrée de l'enceinte), on entre alors dans une phase que l'on peut qualifier de « production », où l'unité d'acquisition et de traitement d'information bascule le système, cette fois, sur la ligne de dérivation « production », en ouvrant l'électrovan correspondant sur la troisième ligne de dérivation.

On peut avantageusement durant cette phase de production définir un temps de temporisation $t_{prod}$ par exemple de quelques minutes, au bout duquel si une pièce à traiter n'a pas à nouveau été détectée à l'entrée de l'enceinte, l'unité d'acquisition et de traitement d'information repassera le système sur le mode « veille » (il faut noter que ce temps $t_{prod}$ peut être dans certains cas beaucoup élevé que quelques minutes puisqu'il doit tenir compte du temps de séjour dans l'enceinte du produit précédemment admis dans cette enceinte).

- on peut avantageusement, à partir du moment où les conditions de débit de production sont déclenchées, effectuer une mesure de la teneur de l'élément considéré dans l'atmosphère de l'enceinte, pour n'autoriser l'entrée des produits (détectés rappelons plus ou moins loin en amont de l'enceinte), que si la teneur mesurée est inférieure à un seuil $S_{prod}$;
- avantageusement, si à un quelconque moment de la phase « production », la mesure de la teneur en l'élément considéré de l'atmosphère de l'enceinte qui parvient à l'unité d'acquisition et de traitement d'information est supérieure à un premier seuil prédéfini S1 (S1 préférentiellement supérieur ou égal à $S_{prod}$ ), l'unité basculera le système sur la ligne de dérivation « conditionnement », en attendant que la teneur mesurée repasse en dessous d'un second seuil déterminé(S2), égal ou inférieur au seuil S1, pour la teneur de l'élément de l'atmosphère de l'enceinte, permettant de repasser le système en mode « production ».

Le mode de réalisation de la variation de pression qui vient d'être décrit est un mode préféré utilisant un faisceau de trois lignes de dérivation (par exemple conditionnement/veille/production). On conçoit que l'on pourrait également, sans sortir du cadre de la présente invention, utiliser un faisceau à deux voies préréglées (par exemple veille/production), certes globalement moins performant mais qui pourrait être retenu par un utilisateur pour des raisons de simplicité et de coût.

De même, on conçoit qu'il serait également possible d'utiliser une ou plusieurs lignes de dérivation supplémentaires par rapport au faisceau de trois lignes décrit ci-dessus, avec des niveaux de pression définis et préréglés dans chacune de ces lignes supplémentaires, par exemple, pour créer un niveau de débit supérieur au niveau de conditionnement précédemment évoqué, mis en oeuvre au cas où la teneur en l'élément considéré de l'atmosphère de l'enceinte dépasserait un niveau prédéfini relativement élevé justifiant donc le balayage de l'enceinte sous fort débit mais également par exemple, la prise de mesures sécuritaires telles que des alarmes sonores ou visuelles et/ou l'interdiction d'entrée des pièces à traiter dans l'enceinte.

Toujours à titre d'exemple, une quatrième ligne de dérivation pourrait être utilisée comme ligne sécuritaire de purge de l'enceinte, dans un cas de configuration où les trois électrovannes sont en mode « normalement fermées ».

L'invention concerne également un procédé d'alimentation en gaz d'une enceinte, mettant en oeuvre la méthode de régulation de la teneur en un élément donné de l'atmosphère de cette enceinte tel que précédemment décrite.

D'autres caractéristiques et avantages de la présente invention ressortiront de la description suivante de modes de réalisation donnée à titre illustratif mais nullement limitatif faite en relation avec les dessins annexés sur lesquels :

- la figure 1 est une représentation schématique d'une installation comportant une enceinte alimentée par une unique ligne primaire à laquelle se raccorde quatre lignes secondaires respectives, permettant l'alimentation en gaz de quatre zones de l'enceinte ;
- la figure 2 est une représentation schématique d'une installation comportant une machine de brasage à la vague alimentée en gaz par un réseau comportant deux lignes primaires, alimentés elles-mêmes au niveau d'un noeud amont par une conduite d'amenée en provenance de la source de gaz, quatre lignes secondaires venant se raccorder à la première ligne primaire, tandis que six lignes secondaires viennent se raccorder à la seconde ligne primaire du réseau;
- la figure 3 est une représentation schématique d'un système permettant la variation de pression sur un des points du réseau selon l'invention ;
- la figure 4 est une représentation schématique d'un autre système permettant la variation de pression sur un des points du réseau selon l'invention.

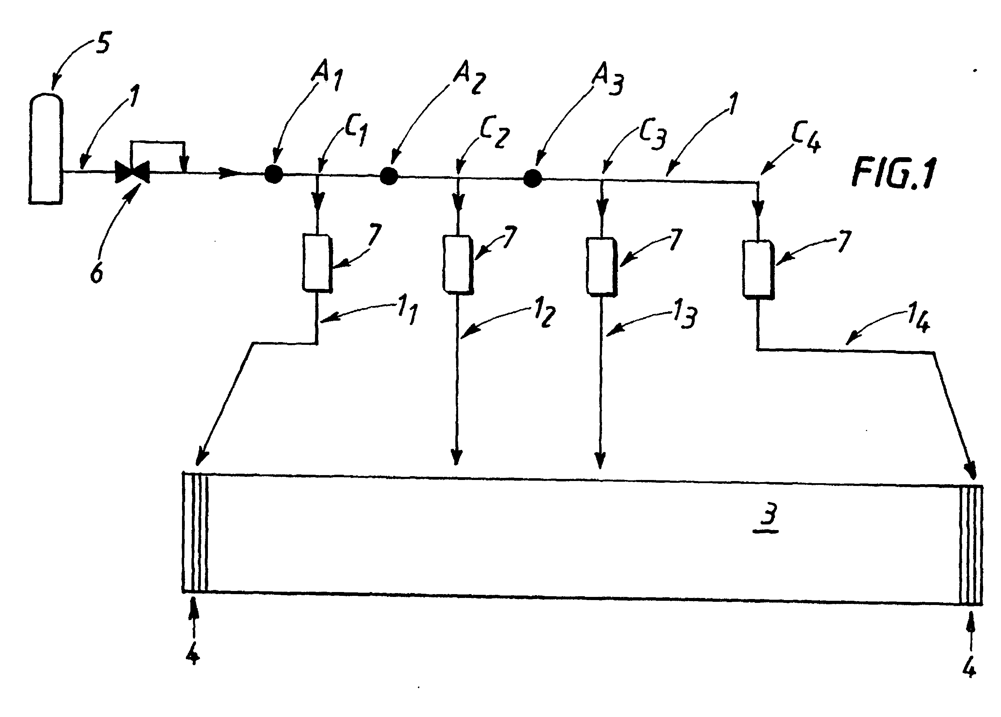

La figure 1 illustre donc le cas d'un four continu 3 qui peut, par exemple, être un four continu où l'on effectue une opération de traitement thermique, ou encore de brasage, par exemple, de composants électroniques, sur circuit. Dans ce dernier cas, un tel four de brasage pourra par exemple, fonctionner selon un mode radiatif (four « infra rouge ») ou encore « convectif ».

Pour le mode de réalisation représenté, l'enceinte 3 est alimentée en gaz au niveau de quatre zones : les deux zones de barrière d'entrée et de sortie 4, ainsi que deux injections en zone chaude du four (ou encore une en zone chaude et une en refroidissement).

Le réseau d'alimentation de l'enceinte 3 est ici constitué d'une unique ligne primaire 1 reliée en sa partie amont à une source de gaz 5, ligne primaire à laquelle sont connectées quatre lignes secondaires ($1_1$, $1_2$, $1_3$, $1_4$) débouchant en leur partie aval à l'intérieur de l'enceinte 3.

On a référencé dans chaque cas par la lettre $C_i$ le point de connexion de chaque ligne secondaire sur la ligne primaire.

Chaque ligne secondaire $1_i$ est équipée d'un moyen de création de perte de charge 7, qui peut être, par exemple, constitué d'une restriction calibrée, d'une vanne de laminage, d'une vanne d'arrêt que l'utilisateur utilise pour laminer le débit parvenant dans la ligne, d'un tableau de gaz, mais de façon plus générale, ce moyen de création d'une perte de charge peut également être obtenu par la configuration de tuyauterie utilisée dans chaque ligne, ou encore par la configuration des buses d'injection de l'atmosphère dans le four, en extrémité aval de chaque ligne.

La référence 6 désigne par ailleurs un détendeur, que l'on a fait figurer en partie amont de la ligne primaire proche de la source de gaz 5 pour le cas échéant, détendre une première fois le gaz en provenance de cette source 5.

On remarque également sur la figure que l'on a symbolisé par la lettre $A_i$ et par des points noirs de grande taille, des localisations possibles sur le réseau d'alimentation du four où l'on peut envisager de faire varier selon l'invention la pression du gaz, pour palier, le cas échéant, à une dégradation de la teneur de l'atmosphère de l'enceinte 3 en un élément donné, par exemple, l'oxygène.

On conçoit alors, en examinant ces différentes possibilités de faire varier la pression sur le réseau d'alimentation de l'enceinte, en réponse à une variation de la teneur de l'atmosphère de l'enceinte en un élément considéré, que l'on peut selon l'invention contrôler l'alimentation en gaz de toute ou partie de l'enceinte :

- le contrôle de la pression au point A1 permet effectivement de contrôler l'alimentation en gaz de la totalité de l'enceinte 3 ;
- le contrôle de la pression au point A2 permet de contrôler l'alimentation de l'enceinte au niveau des trois dernières lignes secondaires ($1_2$, $1_3$, $1_4$).

On constate alors à la lecture de la figure que le contrôle de la pression au point A2 permet sans difficulté de faire varier le débit dans l'une des lignes secondaires $1_2$, $1_3$, $1_4$, sans que les autres lignes secondaires en soit en aucune façon affectées. Ainsi, à titre illustratif, la pression étant fixée au niveau du point A2, le fait de faire varier le débit au niveau de la ligne $1_4$ (par exemple au cours d'une opération de réglage du four, en jouant sur la vanne de laminage 7 de cette ligne secondaire) n'entraînera aucune variation dans les autres lignes secondaires $1_2$ et $1_3$, la pression étant, comme déjà signalé, fixée en amont de ces lignes alors que la perte de charge est par ailleurs fixée dans chacune de ces deux lignes par leur moyen respectif de création d'une perte de charge 7 ;

- un raisonnement comparable pourrait bien sûr être effectué dans le cas du point A3 de l'installation.

On a bien sur illustré au niveau de la figure 1 un mode particulier de réalisation, s'adaptant à une configuration particulière de réseau, mais il convient de noter que s'il était nécessaire de faire varier la pression spécifiquement pour les deux lignes intermédiaires $1_2$ et $1_3$ de zone chaude, une simple modification de l'arrangement des lignes serait effectuée à cette fin.

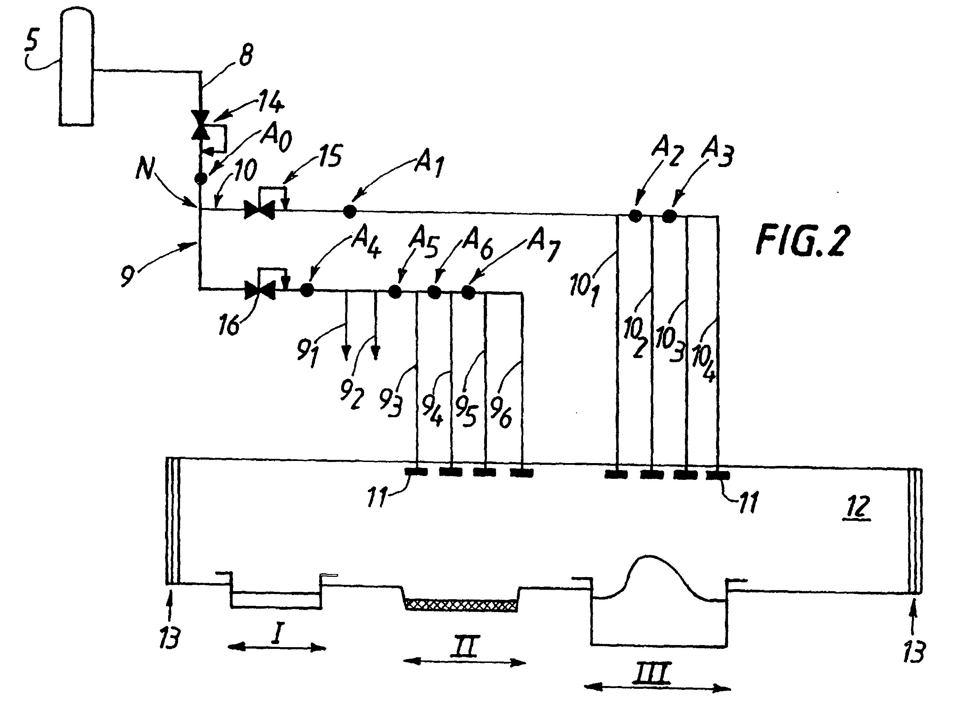

La figure 2 schématise pour sa part, le cas d'une machine de brasage à la vague 12, fermée sur toute sa longueur, et donc compatible avec un fonctionnement sous atmosphère contrôlée dans chacune de ses zones.

La référence 13 correspond aux barrières d'entrée et de sortie de la machine, on a par ailleurs désigné par les symboles I, II, III respectivement les zones de fluxage, de préchauffage, et de brasage (pot de soudure) de la machine.

La figure 2 illustre un cas où la machine de brasage à la vague 12 est alimentée par un réseau constitué de deux lignes primaires (9, 10), provenant toutes deux d'un noeud amont N, lui-même alimenté en gaz par une conduite d'amenée 8, connectée en sa partie amont à une source de gaz 5.

A la ligne primaire 10, sont connectées quatre lignes secondaires $10_1$, $10_2$, $10_3$, $10_4$, débouchant en leur partie aval dans la zone de brasage de la machine, par des buses d'injection 11.

A la ligne primaire 9, sont par ailleurs connectées six lignes secondaires $9_1$, $9_2$, $9_3$, $9_4$, $9_5$, $9_6$, quatre de ces lignes secondaires débouchant en leur partie aval à l'intérieur du tunnel dans la zone de préchauffage de la machine, à nouveau par des buses d'injection 11, alors que deux autres des lignes secondaires ($9_1$, et $9_2$) connectées à cette ligne primaire 9 débouchent dans d'autres zones de la machine 12, par exemple au niveau de la zone 1 de fluxage, ou encore au niveau de l'une ou l'autre des barrières d'entrée / sortie 13.

Ici encore, on a symbolisé par les lettres $A_i$, des exemples de localisation sur le réseau d'alimentation de la machine où l'on peut faire varier selon l'invention la pression du gaz.

On conçoit alors par exemple que le contrôle de la pression au point $A_0$ permet de contrôler l'ensemble de la l'alimentation en gaz de la machine, alors que le contrôle de la pression au point $A_1$ permet de contrôler l'alimentation en gaz de la zone de brasage de la machine, tandis que le contrôle de la pression au point $A_5$ permet le contrôle de l'alimentation en gaz de la zone de préchauffage de la machine.

Ici encore on a représenté une certaine configuration de lignes. S'il était nécessaire de faire varier de façon spécifique la pression uniquement du couple de lignes $10_2$ et $10_3$, ou encore $9_4$ et $9_5$, une simple modification de l'aménagement des lignes serait effectuée à cette fin.

On note qu'il est extrêmement avantageux selon l'invention de pouvoir si nécessaire faire varier la pression d'alimentation en gaz d'une portion très partielle du réseau, par exemple, au point $A_5$ ou encore au point $A_6$, permettant sélectivement de ne volontairement pas contrôler ou réguler l'alimentation en gaz de certaines zones. A titre d'exemple, on peut dans certaines applications vouloir ne pas toucher à certaines zones fortement turbulentes dont la variation entraînera des conséquences importantes en terme de turbulence ou de stabilité de profile thermique. A titre de second exemple, une des deux injections $9_1$ et $9_2$ peut être utilisée à titre de gaz propulseur du fluxeur (type spray). Il est alors plus que recommandé de ne pas soumettre à la régulation de pression cette ligne puisque une telle régulation entraînerait potentiellement des variations de débit de propulsion donc une variation de la quantité de flux déposée sur les circuits.

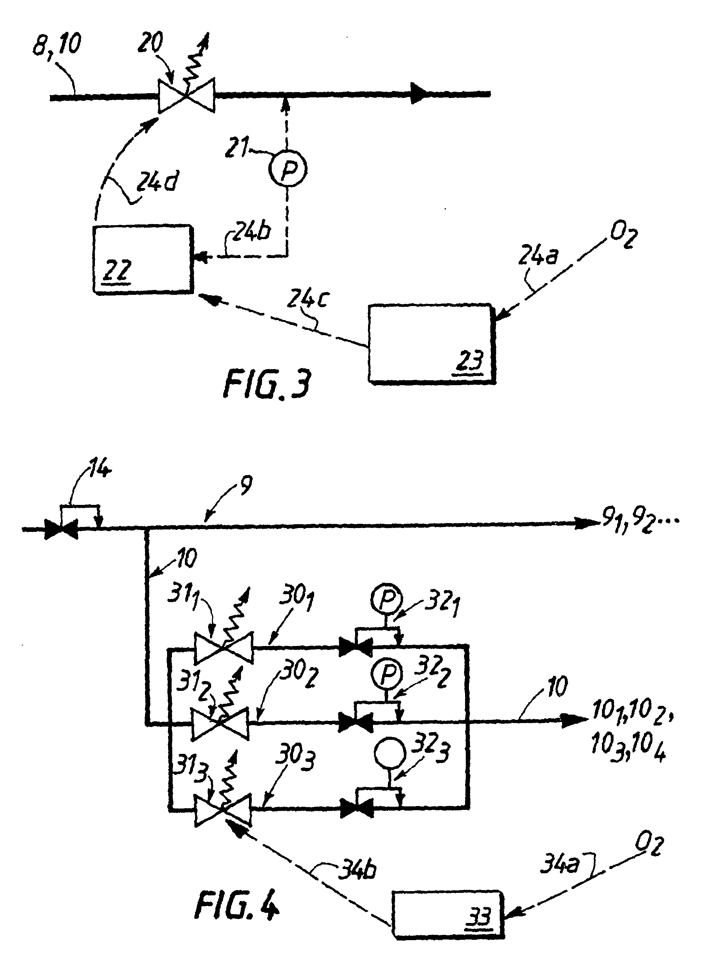

La figure 3 illustre un des modes de réalisation du contrôle de la pression selon l'invention au niveau d'un point $A_i$ du réseau.

On a symbolisé en trait épais et continu une des lignes du réseau, qu'il s'agisse, par exemple, d'une conduite d'amenée 8 ou encore d'une ligne primaire 10.

La ligne est équipée au niveau du point considéré d'une électrovanne 20 à commande proportionnelle, et d'une prise de mesure de pression en aval de cette électrovanne 20 par un pressostat 21.

Le fonctionnement du système peut être alors décrit de la façon suivante : une unité d'acquisition et de traitement des données 23 reçoit (24a) une information de mesure de la teneur de l'atmosphère de l'enceinte en un élément donné (par exemple, l'oxygène), et compare cette mesure de teneur avec une consigne pour la teneur de l'atmosphère de l'enceinte en cette élément donné, consigne de teneur qui lui a précédemment été communiquée.

En fonction de cette comparaison, l'algorithme de l'unité 23 est apte à générer et à transmettre (24c) une nouvelle consigne de pression qu'il convient d'appliquer au point $A_i$ considéré du réseau, nouvelle consigne de pression qui est transmise au moyen 22 (par exemple, une carte électronique) un moyen qui va donc réguler la pression au niveau du point A.

Pour ce faire, le moyen 22 reçoit (24b) la mesure de pression effectuée par le pressostat 21 en aval de l'électrovanne 20, compare la mesure reçue avec la consigne de pression générée par l'unité 23, et rétroagit (24d) en fonction du résultat de cette comparaison sur le taux d'ouverture de l'électrovanne 20, pour ramener si nécessaire la pression en aval de l'électrovanne au niveau de la consigne de pression générée.

La figure 4 illustre un autre mode de réalisation d'une variation de pression, par exemple au niveau du point $A_1$ de la ligne 10 de la figure 2, en amont des quatre lignes secondaires $10_1$, $10_2$, $10_3$, $10_4$. (on aura alors préférentiellement supprimé le détendeur 15).

Pour ce faire, la ligne primaire 10 adopte, au niveau du point $A_1$, une structure où elle éclate en trois lignes de dérivation $30_1$, $30_2$, $30_3$ parallèles, qui se rejoignent toutes en leur partie avale pour se reconnecter au niveau de la ligne primaire 10.

Chaque ligne de dérivation est équipée d'une électrovanne (respectivement $31_1$, $31_2$, $31_3$) et d'un détendeur en aval de chaque électrovanne (respectivement $32_1$, $32_2$, $32_3$).

Comme décrit largement plus haut dans le cadre de la présente demande, une unité d'acquisition et de traitement d'information 33 (par exemple, un automate programmable) reçoit (34a) une information de teneur de l'atmosphère de l'enceinte en un élément donné (par exemple l'oxygène), effectue la comparaison de la teneur reçue avec une consigne de teneur prédéfinie qui lui avait été au préalable communiquée, et rétroagit (34b), selon le résultat de cette comparaison, pour fermer l'électrovanne en service au moment considéré et ouvrir l'électrovanne d'une autre des lignes de dérivation, dont le niveau de pression préréglé par le détendeur qui lui est associé correspond au débit qu'il est nécessaire de faire parvenir à l'enceinte via la ligne primaire 10 en réaction à l'évolution constatée de la teneur en l'élément considéré dans l'atmosphère de l'enceinte.

Une installation « proche » de celle décrite dans le cadre de la figure 1, a été utilisée pour la réalisation d'un premier exemple de mise en oeuvre de l'invention.

L'enceinte 3 était un four de brasage par refusion de composants électroniques, de type convectif, de marque THERMATEC (France).

Le four est ici alimenté non par une seule ligne primaire 1 mais par un réseau de 2 lignes primaires :

- une première ligne primaire desservant une première série de 4 lignes secondaires, desservant d'une part la barrière d'entrée du four et d'autre part la barrière de sortie du four qui se trouve faire office ici à la fois de barrière et de zone de refroidissement;
- une seconde ligne primaire desservant une seconde série de 4 lignes secondaires débouchant elles dans la zone chaude du four.

Chaque ligne secondaire est équipée d'un ensemble vanne de laminage/débitmètre.

Une installation telle que celle décrite dans le cadre de la figure 3 a alors été utilisée ici pour faire varier si nécessaire la pression du gaz en un point de la seconde ligne primaire situé en amont de la série de lignes secondaire qui lui sont rattachées et qui aboutissent toutes en zone chaude (permettant ainsi de contrôler de façon sélective uniquement ces lignes).

L'ensemble du réseau est alimenté en temps normal par 42 Nm3/h d'azote d'origine cryogénique, permettant de maintenir moins de 100 ppm d'oxygène résiduel dans la zone chaude du four.

L'objectif qu'a émis le site utilisateur était d'abaisser la consommation globale du four autour de 28 à 30 Nm3/h d'azote (correspondant donc à une diminution de débit de près de 30%).

L'étude de l'application du site (circuits traités, crème à braser utilisée...) a permis d'aboutir à la conclusion qu'il était possible de monter à 3000 ppm la limite de teneur d'oxygène résiduel tolérable dans la zone chaude du four, ceci sans altérer la qualité et reproductibilité des produits obtenus, et tout en conservant une large fenêtre de procédé que fournit traditionnellement dans de telles opérations de brasage une atmosphère à base d'azote.

On a alors régulé, à l'aide du système de la figure 3 (régulateur 23, carte électronique 22, électrovanne 20 et pressostat 21) les conditions suivantes :

- la première série de 4 lignes secondaires n'était pas régulée. Elle était alimentée à l'aide d'un débit voisin de 20 Nm3/h;
- seule la seconde série de 4 lignes secondaires débouchant dans la zone chaude du four était régulée, à une pression permettant d'atteindre un débit moyen voisin de 10 Nm3/h (pour un total avoisinant donc les 30 Nm3/h).

Il faut alors noter que le réglage, en production, du débit de telle ou telle ligne secondaire de la zone chaude (donc comme rappelé plus haut dans la partie introductive de la présente demande, du débit d'addition d'azote, les zones fonctionnant en recirculation), pouvait s'effectuer de façon extrêmement souple et aisée sans qu'aucune des autres lignes secondaires de la zone chaude n'en soit en aucune manière perturbée.

Il faut également noter que la méthode et le procédé selon l'invention permettent, sur ce cas précis, de ne contrôler que les débits (débits d'addition dont le but est de régénérer les pertes intervenues en recirculation) parvenant en zone chaude, en évitant de « toucher » aux autres débits, en particulier celui de la barrière de sortie qui sert de refroidissement, dont la variation entraînerait des modifications considérables sur le profil thermique réalisé.

Une installation proche de celle décrite dans le cadre de la figure 2, a été utilisée pour la réalisation d'un second exemple de mise en oeuvre de l'invention.

L'enceinte 12 était une machine de brasage à la vague de composants électroniques, de marque SEHO (modèle 7250).

La machine est alimentée par deux lignes primaires 9 et 10, une première ligne desservant une première série de 6 lignes secondaires, desservant la zone de préchauffage II de la machine, le fluxeur spray de la zone de fluxage I de la machine, et d'autre part la zone des pompes du bain de soudure (III), et une seconde ligne primaire desservant une seconde série de 4 lignes secondaires débouchant dans la zone de brasage III, au dessus du bain.

Chacune des lignes primaire était à l'origine munie en sa partie amont d'un détendeur (15, 16) et d'un ensemble vanne de laminage/débitmètre.

Le modèle de machine utilisé était par ailleurs dépourvu des barrières 13.

Toutes les lignes secondaires étaient dépourvues de moyens de création d'un perte de charge, comme représenté sur la figure 2, les buses d'injection 11 en bout de ligne faisant office de tels moyens.

Une installation telle que celle décrite dans le cadre de la figure 4 a alors été utilisée ici pour faire varier si nécessaire la pression du gaz en le point A1 de la ligne primaire 10, permettant ainsi de contrôler de façon sélective uniquement les lignes secondaires débouchant en zone de brasage III.

En situation habituelle, non régulée, la machine fonctionne avec un débit global voisin de 25 Nm3/h d'azote d'origine cryogénique. On a alors mis en place, à l'aide du système de la figure 4, les phases suivantes :

- en veille, un débit global moyen de 19,7 Nm3/h, correspondant à un débit de 12,5 Nm3/h dans la ligne primaire 9 non régulée, et en moyenne 7,2 Nm3/h dans la ligne primaire 10 régulée (pression moyenne de 3 bars absolus au point A1);

- en production (pour une teneur résiduelle en oxygène au niveau de la zone de brasage inférieure à 175 ppm = $S_{prod}$), un débit global moyen de 21 Nm3/h, correspondant à un débit de 12,5 Nm3/h dans la ligne primaire non régulée, et en moyenne 8,5 Nm3/h dans la ligne primaire 10 régulée (pression moyenne de 3,6 bars absolus au point A1);

- conditionnement : si à un quelconque moment de la phase « production », la mesure de la teneur en oxygène qui parvient à l'unité d'acquisition et de traitement d'information est supérieure à 175 ppm (= S1 , ici égal donc à $S_{prod}$ ), l'unité bascule le système sur la ligne de dérivation « conditionnement », en attendant que la teneur mesurée repasse en dessous d'un second seuil déterminé (S2) égal à 100 ppm.

Les conditions d'alimentation « conditionnement » sont alors les suivantes : un débit global moyen de 25 Nm3/h, correspondant à un débit de 12,5 Nm3/h dans la ligne primaire non régulée, et en moyenne un débit de 12,5 Nm3/h dans la ligne primaire 10 régulée (pression moyenne de 6,3 bars absolus au point A1).

La mise en place du procédé d'alimentation selon l'invention a permis au site utilisateur d'atteindre en moyenne un débit global de seulement 20 Nm3/h.

Il faut alors noter que le réglage, en production, du débit de telle ou telle ligne secondaire de la zone de brasage III, pouvait s'effectuer de façon extrêmement souple et aisée sans qu'aucune des autres lignes secondaires de cette zone n'en soit en aucune manière perturbée.

Il faut également noter que la méthode et le procédé selon l'invention permettent, sur ce cas précis, de ne contrôler que les débits parvenant en zone de brasage, en évitant de « toucher » aux autres débits, en particulier celui du fluxeur, dont la variation entraînerait des modifications considérables sur la qualité de fluxage réalisée.

Quoique la présente invention ait été décrite en relation avec des modes de réalisation particuliers, elle ne s'en trouve pas limitée pour autant mais est au contraire susceptible de modifications et de variantes qui apparaîtront à l'homme de l'art .

Ainsi, si elle a été tout particulièrement illustrée à l'aide des deux modes de réalisation de la variation de pression décrits dans le cadre des figures 3 et 4, on comprendra que l'on ne sort pas du cadre de la présente invention en utilisant d'autres modes de variation de la pression en un point du réseau, en réponse à une variation de la teneur mesurée de l'élément considéré dans l'atmosphère de l'enceinte, que ces autres modes de variation soient plus ou moins sophistiqués que les modes exemplifiés.

Ainsi, à titre illustratif, des nombreux modes possibles de réalisation de l'invention, on peut utiliser au lieu de l'électrovanne largement décrite précédemment, un dispositif commercialement disponible dénommé "convertisseur Intensité/Pression" dont, on le comprendra aisément, l'utilisation est alors la suivante : à réception de la teneur en l'élément donné et en fonction du résultat de la comparaison effectuée avec la valeur de consigne déterminée, l'unité envoit si nécessaire au convertisseur un signal représentatif de la nouvelle pression à mettre en place.

De même, si on a tout particulièrement insisté, dans ce qui précède, sur des cas de fours de traitement thermique ou autres fours ou machines de brasage, on conçoit que tous les avantages amenés par l'invention du fait d'une régulation de teneur par action sur une pression, s'expriment beaucoup plus généralement dans d'autres types d'installation mettant en oeuvre une atmosphère dont on veut contrôler la qualité.

**Revendications**

1. Méthode de régulation de la teneur en un élément donné de l'atmosphère d'une enceinte (3,12), l'enceinte étant alimentée par un réseau d'alimentation comportant au moins une ligne primaire (1,9,10), reliée en sa partie amont à une source dudit gaz (5), et au moins deux lignes secondaires respectives ($1_i$, $9_i$ $10_i$), connectées en leur partie amont à la ligne primaire et débouchant en leur partie aval à l'intérieur de l'enceinte, les lignes primaires provenant d'un noeud amont (N) lui même alimenté en ledit gaz par une conduite d'amenée (8), **caractérisée par** la mise en oeuvre des étapes suivantes :

   a) on mesure la teneur, en l'élément donné, de l'atmosphère de l'enceinte, en au moins un point de l'enceinte ;
   b) on effectue une comparaison de la teneur mesurée avec au moins une valeur de consigne déterminée pour la teneur en ledit élément de l'atmosphère de l'enceinte en le dit point;
   c) on fait varier, le cas échéant, selon le résultat de la comparaison de l'étape b), la pression du gaz au niveau d'un des points ($A_i$) dudit réseau.

2. Méthode de régulation selon la revendication 1, **caractérisée en ce que** l'on fait varier la pression du gaz au niveau d'un des points ($A_i$) suivants dudit réseau :

   i) sur la ou une des lignes primaires, en amont du point de connexion de la première ligne secondaire respective ($1_1$ , $9_1$, $10_1$) sur la ligne primaire considérée (A1,A4);
   j) sur la ou une des lignes primaires, entre les deux points de connexion de deux desdites lignes secondaires respectives ($9_3/9_4$, $9_4/9_5$, $10_1/10_2$, $10_2/10_3$), sur la ligne primaire considérée ;
   k) sur la conduite d'amenée (8), en amont dudit noeud (N) amont ($A_0$).

3. Méthode selon la revendication 1 ou 2, **caractérisée en ce que** l'on effectue l'étape c) de variation de la pression en ledit point du réseau de la façon suivante

   c1) on dispose audit point du réseau une électrovanne à commande proportionnelle ;

   c2) on mesure (21) la pression du gaz au voisinage dudit point du réseau, en aval de l'électrovanne;
   c3) on transmet (24a) ladite mesure de la teneur en l'élément donné, acquise durant l'étape a), vers une unité (23) d'acquisition et de traitement d'information, apte, en fonction de ladite teneur et de la comparaison effectuée durant l'étape b), à générer une consigne de pression Cp ;
   c4) on transmet (24c) cette consigne de pression Cp à un moyen (22), apte à effectuer une comparaison entre ladite mesure de pression et ladite consigne Cp, et à modifier en conséquence la taux d'ouverture de l'électrovanne (20) pour ramener si nécessaire ladite pression au niveau de la consigne cp.

4. Méthode selon l'une des revendications 1 à 3, **caractérisée en ce que** ledit élément dont on mesure la teneur dans l'atmosphère de l'enceinte durant l'étape a) est l'oxygène.

5. Méthode selon la revendication 1 ou 2, **caractérisée en ce que** l'on effectue l'étape c) de variation de la pression en ledit point du réseau de la façon suivante :

   c1) la ligne considérée du réseau (ligne primaire, conduite d'amenée) se subdivise au niveau dudit point du réseau en au moins trois lignes de dérivation ($30_1$, $30_2$, $30_3$), chacune de ces lignes de dérivation étant équipée d'une électrovanne ($31_1$, $31_2$, $31_3$) et d'un détendeur ($32_1$, $32_2$, $32_3$) situé en aval de l'électrovanne, l'aval de chacune des lignes de dérivation étant connecté à nouveau à la ligne considérée du réseau ;
   c2) on prérègle chacun des au moins trois détendeurs à un niveau de pression déterminée ;
   c3) on transmet ladite mesure de la teneur en l'élément donné, acquise durant l'étape a), vers une unité (33) d'acquisition et de traitement d'informations, apte, en fonction de ladite teneur et de la comparaison effectuée durant l'étape b), à ouvrir sélectivement une desdites électrovannes, pour ne permettre le passage du gaz que dans la ligne de dérivation dont l'électrovanne a ainsi été ouverte.

6. Méthode selon la revendication 5, **caractérisée en ce que** ledit élément donné dont on mesure la teneur dans l'atmosphère de l'enceinte durant l'étape a) est l'oxygène.

7. Méthode selon l'une des revendications 5 ou 6, **caractérisée en ce que** lesdits niveaux de pression préréglés dans chacune des au moins trois lignes de dérivation correspondent respectivement à :

- dans une première ligne de dérivation, un détendeur préréglé à un premier niveau de pression $P_v$ correspondant à un débit de gaz, en aval du détendeur , dit débit de veille $Q_v$;
- dans une seconde ligne de dérivation, un détendeur préréglé à un second niveau de pression $P_{prod}$ correspondant à un débit de gaz, en aval du détendeur, dit débit de production $Q_{prod}$;
- dans une troisième ligne de dérivation, un détendeur préréglé à un troisième niveau de pression $P_{cond}$ correspondant à un débit de gaz, en aval du détendeur, dit débit de conditionnement $Q_{cond}$;.

la position respective des trois débits étant la suivante :

$$Q_v < Q_{prod} < Q_{cond}$$

8. Procédé d'alimentation en gaz d'une enceinte (3,12), selon lequel l'enceinte est alimentée par un réseau d'alimentation comportant au moins une ligne primaire (1,9,10), reliée en sa partie amont à une source dudit gaz (5), et au moins deux lignes secondaires respectives ($1_i$, $9_i$ $10_i$), connectées en leur partie amont à la ligne primaire et débouchant en leur partie aval à l'intérieur de l'enceinte, les lignes primaires provenant d'un noeud amont (N) lui même alimenté en ledit gaz par une conduite d'amenée (8), **caractérisé par** la mise en oeuvre des étapes suivantes :

a) on mesure la teneur, en un élément donné, de l'atmosphère de l'enceinte, en au moins un point de l'enceinte ;
b) on effectue une comparaison de la teneur mesurée avec au moins une valeur de consigne déterminée pour la teneur en ledit élément de l'atmosphère de l'enceinte en le dit point;
c) on fait varier, le cas échéant, selon le résultat de la comparaison de l'étape b), la pression du gaz au niveau d'un des points ($A_i$) dudit réseau.

9. Procédé selon la revendication 8, **caractérisé en ce que** l'on fait varier la pression du gaz au niveau d'un des points ($A_i$) suivants dudit réseau :

i) sur la ou une des lignes primaires, en amont du point de connexion de la première ligne secondaire respective ($1_1$ , $9_1$, $10_1$) sur la ligne primaire considérée (A1,A4);
j) sur la ou une des lignes primaires, entre les deux points de connexion de deux desdites lignes secondaires respectives ($9_3/9_4$, $9_4/9_5$, $10_1/10_2$, $10_2/10_3$), sur la ligne primaire considérée ;
k) sur la conduite d'amenée (8), en amont dudit noeud (N) amont ($A_0$).

10. Procédé selon la revendication 8 ou 9, **caractérisé en ce que** l'on effectue l'étape c) de variation de la pression en ledit point du réseau de la façon suivante :

c1) on dispose audit point du réseau une électrovanne à commande proportionnelle ;
c2) on mesure (21) la pression du gaz au voisinage dudit point du réseau, en aval de l'électrovanne;
c3) on transmet (24a) ladite mesure de la teneur en l'élément donné, acquise durant l'étape a), vers une unité (23) d'acquisition et de traitement d'information, apte, en fonction de ladite teneur et de la comparaison effectuée durant l'étape b), à générer une consigne de pression Cp ;
c4) on transmet (24c) cette consigne de pression Cp à un moyen (22), apte à effectuer une comparaison entre ladite mesure de pression et ladite consigne Cp, et à modifier en conséquence la taux d'ouverture de l'électrovanne (20) pour ramener si nécessaire ladite pression au niveau de la consigne Cp.

11. Procédé selon la revendication 8 ou 9, **caractérisé en ce que** l'on effectue l'étape c) de variation de la pression en ledit point du réseau de la façon suivante :

c1) la ligne considérée du réseau (ligne primaire, conduite d'amenée) se subdivise au niveau dudit point du réseau en au moins trois lignes de dérivation ($30_1$, $30_2$, $30_3$), chacune de ces lignes de dérivation étant équipée d'une électrovanne ($31_1$, $31_2$, $31_3$) et d'un détendeur ($32_1$, $32_2$, $32_3$) situé en aval de l'électrovanne, l'aval de chacune des lignes de dérivation étant connecté à nouveau à la ligne considérée du réseau ;
c2) on prérègle chacun des au moins trois détendeurs à un niveau de pression déterminée ;
c3) on transfert ladite mesure de la teneur en l'élément donné, acquise durant l'étape a), vers une unité (33) d'acquisition et de traitement d'informations, apte, en fonction de ladite teneur et de la comparaison effectuée durant l'étape b), à ouvrir sélectivement une desdites électrovannes, pour ne permettre le passage du gaz que dans la ligne de dérivation dont l'électrovanne a ainsi été ouverte.

12. Procédé selon la revendication 11, *caractérisé en*

**ce que** lesdits niveaux de pression préréglés dans chacune des au moins trois lignes de dérivation correspondent respectivement à :

- dans une première ligne de dérivation, un détendeur préréglé à un premier niveau de pression $P_v$ correspondant à un débit de gaz, en aval du détendeur , dit débit de veille $Q_v$;
- dans une seconde ligne de dérivation, un détendeur préréglé à un second niveau de pression $P_{prod}$ correspondant à un débit de gaz, en aval du détendeur, dit débit de production $Q_{prod}$;
- dans une troisième ligne de dérivation, un détendeur préréglé à un troisième niveau de pression $P_{cond}$ correspondant à un débit de gaz, en aval du détendeur, dit débit de conditionnement $Q_{cond}$;

la position respective des trois débits étant la suivante :

$$Q_v < Q_{prod} < Q_{cond}$$

13. Application pour l'alimentation en gaz d'un four de traitement thermique ou d'un four de brasage, ou d'un four ou machine de brasage/étamage de composants électroniques, du procédé selon l'une des revendications 11 ou 12.

14. Application selon la revendication 13, **caractérisée par** la mise en oeuvre des phases suivantes :

- durant une première phase de démarrage du four ou de la machine, on alimente l'enceinte en gaz par ledit réseau d'alimentation, ladite unité d'acquisition et de traitement d'informations ayant ouvert l'électrovanne de la ligne de dérivation dont le détenteur a été préréglé à un niveau de pression correspondant au débit de conditionnement $Q_{Cond}$;
- on maintient la phase de conditionnement durant un temps predéfini $t_{cond}$ ;
- au delà du temps de conditionnement $t_{cond}$, ladite unité d'acquisition et de traitement d'informations ferme l'électrovanne de la ligne de dérivation dont le niveau de pression préréglé correspond au débit de conditionnement $Q_{Cond}$, pour ouvrir l'électrovanne de la ligne de dérivation dont le niveau de pression préréglé correspond au débit de veille $Q_v$;
- lorsqu'une pièce à traiter dans l'enceinte est détectée à l'entrée de l'enceinte, ladite unité d'acquisition et de traitement d'informations ferme l'électrovanne de la ligne de dérivation dont le niveau de pression préréglé correspond au débit de veille $Q_v$ pour passer en phase de production en ouvrant l'électrovanne de la ligne de dérivation dont le niveau de pression préréglé correspond au débit de production $Q_{prod}$;

- si au bout d'un temps prédéterminé $t_{prod}$ , une nouvelle pièce à traiter n'est pas détectée à l'entrée de l'enceinte, ladite unité d'acquisition et de traitement d'informations ferme l'électrovanne de la ligne de dérivation dont le niveau de pression préréglé correspond au débit de production $Q_{prod}$ pour repasser en phase de veille en ouvrant l'électrovanne de la ligne de dérivation dont le niveau de pression préréglé correspond au débit de veille $Q_v$.

15. Application selon la revendication 13 ou 14, **caractérisée en ce que** au moins deux des lignes secondaires dudit réseau débouchent à l'intérieur de la zone chaude du four ou de la machine, et **en ce que** l'on effectue ladite étape c) de variation de pression en un point du réseau qui n'alimente que lesdites au moins deux lignes secondaires du réseau débouchant à l'intérieur de la zone chaude du four ou de la machine.

16. Application pour l'alimentation en gaz d'un four de traitement thermique ou d'un four de brasage, ou d'un four ou machine de brasage/étamage de composants électroniques, du procédé selon l'une des revendications 8 à 10.

17. Application selon la revendication 16, **caractérisée en ce que** au moins deux des lignes secondaires dudit réseau débouchent à l'intérieur de la zone chaude du four ou de la machine, et **en ce que** l'on effectue ladite étape c) de variation de pression en un point du réseau qui n'alimente que lesdites au moins deux lignes secondaires débouchant à l'intérieur de la zone chaude du four ou de la machine.

18. Installation d'alimentation en gaz d'une enceinte (3,12), comportant :

- une source dudit gaz (5);
- un réseau d'alimentation en gaz de l'enceinte, comportant au moins une ligne primaire (1,9,10), reliée en sa partie amont à ladite source de gaz (5), et au moins deux lignes secondaires respectives ($1_i$, $9_i$ $10_i$), connectées en leur partie amont à la ligne primaire et débouchant à leur partie aval à l'intérieur de l'enceinte, les lignes primaires provenant toutes d'un noeud amont (N) lui même alimenté en ledit gaz par une conduite d'amenée (8);
- des moyens de mesure de la teneur, en un élément donné, de l'atmosphère de l'enceinte, en au moins un point de l'enceinte ;
- des moyens (23, 33) pour effectuer une comparaison de 1a teneur mesurée avec au moins une valeur de consigne déterminée pour la teneur en ledit élément de l'atmosphère de l'enceinte en le dit point;

- des moyens (22, 20, 33, $31_i$) pour faire varier, le cas échéant, selon le résultat de la dite comparaison de teneurs, la pression du gaz au niveau d'un des points ($A_i$) dudit réseau.

19. Installation selon la revendication 18, **caractérisée en ce que** le dit point du réseau où l'on effectue le cas échéant une variation de pression est l'un des points suivants :

    i) sur la ou une des lignes primaires, en amont du point de connexion de la première ligne secondaire respective ($1_1$, $9_1$, $10_1$) sur la ligne primaire considérée;
    j) sur la ou une des lignes primaires, entre les deux points de connexion de deux desdites lignes secondaires respectives ($9_3/9_4$, $9_4/9_5$, $10_1/10_2$, $10_2/10_3$), sur la ligne primaire considérée ;
    k) sur la conduite d'amenée (8), en amont dudit noeud amont (N).

20. Installation selon la revendication 18 ou 19, caractérisée en ce quelle comprend :

    c1) une électrovanne à commande proportionnelle située au niveau dudit point du réseau;
    c2) des moyens (21) de mesure de la pression du gaz au voisinage dudit point du réseau, en aval de l'électrovanne;
    c3) une unité (23) d'acquisition et de traitement d'information apte, en fonction de ladite teneur mesurée et de la dite comparaison de teneurs, à générer une consigne de pression Cp;
    c4) un moyen (22), apte à effectuer une comparaison entre ladite mesure de pression et ladite consigne Cp, et à modifier en conséquence le taux d'ouverture de l'électrovanne (20) pour ramener si nécessaire ladite pression au niveau de la consigne Cp.

21. Installation selon la revendication 18 ou 19, **caractérisée en ce que** :

- la ligne considérée du réseau où se situe ledit point se subdivise en ce point en au moins trois lignes de dérivation ($30_1$, $30_2$, $30_3$), chacune de ces lignes de dérivation étant équipée d'une électrovanne ($31_1$, $31_2$, $31_3$) et d'un détendeur ($32_1$, $32_2$, $32_3$) situé en aval de l'électrovanne, l'aval de chacune des lignes de dérivation étant connecté à nouveau à la ligne considérée du réseau ; et **en ce qu'**elle comprend
- une unité (33) d'acquisition et de traitement d'informations, apte, en fonction de ladite teneur mesurée et de la dite comparaison de teneurs, à ouvrir sélectivement une desdites électrovannes, pour ne permettre le passage du gaz que dans la ligne de dérivation dont l'électrovanne a ainsi été ouverte.

22. Installation selon l'une des revendications 18 à 21, **caractérisée en ce que** tout ou partie des dites lignes secondaires est munie d'un moyen de création d'une perte de charge (7).

23. Installation selon la revendication 22, **caractérisée en ce que** le dit moyen de création d'une perte de charge est constitué par l'un des moyens suivants :

- une restriction calibrée,
- une vanne de laminage,
- une vanne d'arrêt,
- un tableau de gaz,
- la configuration de tuyauterie utilisée dans la ligne,
- une configuration de buse d'injection de gaz dans le four située en extrémité aval de la ligne considérée.

**Patentansprüche**

1. Verfahren zur Regelung des Gehaltes eines bestimmten Elementes in der Atmosphäre eines Gehäuses (3, 12), wobei das Gehäuse durch ein Versorgungsnetz versorgt wird, das mindestens eine Primärleitung (1, 9, 10), die an ihrem stromaufwärtigen Teil mit einer Quelle des Gases (5) verbunden ist, und mindestens zwei jeweilige Sekundärleitungen ($1_i$, $9_i$, $10_i$) umfasst, die an ihrem stromaufwärtigen Teil mit der Primärleitung verbunden sind und an ihrem stromabwärtigen Teil im Innern des Gehäuses einmünden, wobei die Primärleitungen von einem stromaufwärtigen Verbindungsknoten (N) ausgehen, der selbst durch eine Zufuhrleitung (8) mit dem Gas versorgt wird, **gekennzeichnet durch** die Durchführung der folgenden Schritte:

    a) Messen des Gehaltes eines bestimmten Elementes in der Atmosphäre des Gehäuses an mindestens einem Punkt des Gehäuses;

    b) Durchführen eines Vergleiches des gemessenen Gehaltes mit mindestens einem Einstellwert, der für den Gehalt des Elementes in der Atmosphäre des Gehäuses an dem Punkt festgelegt ist;

    c) gegebenenfalls Verändern gemäß dem Ergebnis des Vergleiches des Schrittes b) des Gasdrucks auf Höhe eines der Punkte ($A_i$) des Netzes.

**2.** Verfahren zur Regelung nach Anspruch 1, **dadurch gekennzeichnet, dass** die Veränderung des Gasdrucks auf Höhe eines der folgenden Punkte ($A_i$) des Netzes veranlasst wird:

   i) an der oder einer der Primärleitungen, stromaufwärts des Verbindungspunktes der ersten jeweiligen Sekundärleitung ($1_1$, $9_1$, $10_1$) mit der betreffenden Primärleitung (A1, A4);

   j) an der oder einer der Primärleitungen, zwischen den beiden Verbindungspunkten von zwei der jeweiligen Sekundärleitungen ($9_3/9_4$, $9_4/9_5$, $10_1/10_2$, $10_2/10_3$) mit der betreffenden Primärleitung;

   k) an der Zufuhrleitung (8), stromaufwärts ($A_o$) des stromaufwärtigen Verbindungsknotens (N).

**3.** Verfahren nach Anspruch 1 oder 2, **dadurch gekennzeichnet, dass** der Schritt c) zur Veränderung des Drucks an dem Netzpunkt auf die folgende Weise durchgeführt wird:

   c1) Anordnen eines Elektroventils mit proportionaler Steuerung an dem Netzpunkt;

   c2) Messen (21) des Gasdrucks in der Nähe des dem Elektroventil stromabwärtigen Netzpunktes;

   c3) Übermitteln (24a) der Messung des Gehaltes des bestimmten Elementes, der während des Schrittes a) erfasst wurde, zu einer Informationserfassungs- und verarbeitungseinheit (23), die in der Lage ist, entsprechend dem Gehalt und dem während des Schrittes b) durchgeführten Vergleich einen Druckeinstellwert Cp zu erzeugen;

   c4) Übermitteln (24c) dieses Druckeinstellwertes Cp an ein Mittel (22), das in der Lage ist, einen Vergleich zwischen der Druckmessung und dem Einstellwert Cp durchzuführen und dementsprechend den Öffnungsgrad des Elektroventils (20) zu verändern, um den Druck, falls erforderlich, auf den Pegel des Einstellwertes Cp zurückzubringen.

**4.** Verfahren nach einem der Ansprüche 1 bis 3, **dadurch gekennzeichnet, dass** das Element, dessen Gehalt in der Atmosphäre des Gehäuses während des Schrittes a) gemessen wird, Sauerstoff ist.

**5.** Verfahren nach Anspruch 1 oder 2, **dadurch gekennzeichnet, dass** der Schritt c) zur Veränderung des Drucks an dem Netzpunkt auf die folgende Weise durchgeführt wird:

   c1) die betreffende Leitung des Netzes (Primärleitung, Zufuhrleitung) sich auf Höhe des Netzpunktes in mindestens drei Abzweigungsleitungen ($30_1$, $30_2$, $30_3$) unterteilt, wobei jede dieser Abzweigungsleitungen mit einem Elektroventil ($31_1$, $31_2$, $31_3$) und einem vom Elektroventil stromabwärts angeordneten Druckreduzierventil ($32_1$, $32_2$, $32_3$) ausgestattet ist, wobei der stromabwärtige Teil jeder der Abzweigungsleitungen wiederum mit der betreffenden Leitung des Netzes verbunden ist;

   c2) Voreinstellen von jedem der mindestens drei Druckreduzierventile auf einen festgelegten Druckpegel;

   c3) Übermitteln der Messung des Gehaltes eines bestimmten Elementes, der während des Schrittes a) erfasst wurde, zu einer Informationserfassungs- und verarbeitungseinheit (33), die in der Lage ist, entsprechend dem Gehalt und dem während des Schrittes b) durchgeführten Vergleich wahlweise eines der Elektroventile zu öffnen, um den Durchgang des Gases nur durch die Abzweigungsleitung zu gestatten, deren Elektroventil somit geöffnet worden ist.

**6.** Verfahren nach Anspruch 5, **dadurch gekennzeichnet, dass** das bestimmte Element, dessen Gehalt in der Atmosphäre des Gehäuses während des Schrittes a) gemessen wird, Sauerstoff ist.

**7.** Verfahren nach einem der Ansprüche 5 oder 6, **dadurch gekennzeichnet, dass** die voreingestellten Druckpegel in jeder der mindestens drei Abzweigungsleitungen jeweils den Folgenden entsprechen:

   - in einer ersten Abzweigungsleitung, einem Druckreduzierventil, das auf einen ersten Druckpegel $P_v$ voreingestellt ist, der einem dem Druckreduzierventil stromabwärtigen Gasdurchsatz entspricht, genannt Bereitstellungsdurchsatz $Q_v$;

   - in einer zweiten Abzweigungsleitung, einem Druckreduzierventil, das auf einen zweiten Druckpegel $P_{prod}$ voreingestellt ist, der einem dem Druckreduzierventil stromabwärtigen Gasdurchsatz entspricht, genannt Produktionsdurchsatz $Q_{prod}$;

   - in einer dritten Abzweigungsleitung, einem Druckreduzierventil, das auf einen dritten Druckpegel $P_{cond}$ voreingestellt ist, der einem dem Druckreduzierventil stromabwärtigen Gasdurchsatz entspricht, genannt Aufbereitungsdurchsatz $Q_{cond}$;

wobei die jeweiligen Positionen der drei Durchsätze die Folgenden sind:

$$Q_v < Q_{prod} < Q_{cond}.$$

8. Verfahren zur Versorgung eines Gehäuses (3, 12) mit Gas, wobei das Gehäuse durch ein Versorgungsnetz versorgt wird, das mindestens eine Primärleitung (1, 9, 10), die an ihrem stromaufwärtigen Teil mit einer Quelle des Gases (5) verbunden ist, und mindestens zwei jeweilige Sekundärleitungen ($1_i$, $9_i$, $10_i$) umfasst, die an ihrem stromaufwärtigen Teil mit der Primärleitung verbunden sind und an ihrem stromabwärtigen Teil im Innern des Gehäuses einmünden, wobei die Primärleitungen von einem stromaufwärtigen Verbindungsknoten (N) ausgehen, der selbst durch eine Zufuhrleitung (8) mit dem Gas versorgt wird, **gekennzeichnet durch** die Durchführung der folgenden Schritte:

a) Messen des Gehaltes eines bestimmten Elementes in der Atmosphäre des Gehäuses an mindestens einem Punkt des Gehäuses;

b) Durchführen eines Vergleiches des gemessenen Gehaltes mit mindestens einem Einstellwert, der für den Gehalt des Elementes in der Atmosphäre des Gehäuses an dem Punkt festgelegt ist;

c) gegebenenfalls Verändern gemäß dem Ergebnis des Vergleiches des Schrittes b) des Gasdrucks auf Höhe eines der Punkte ($A_i$) des Netzes.

9. Verfahren nach Anspruch 8, **dadurch gekennzeichnet, dass** die Veränderung des Gasdrucks auf Höhe eines der folgenden Punkte ($A_i$) des Netzes veranlasst wird:

i) an der oder einer der Primärleitungen, stromaufwärts des Verbindungspunktes der ersten jeweiligen Sekundärleitung ($1_1$, $9_1$, $10_1$) mit der betreffenden Primärleitung (A1, A4);

j) an der oder einer der Primärleitungen, zwischen den zwei Verbindungspunkten von zwei der jeweiligen Sekundärleitungen ($9_3/9_4$, $9_4/9_5$, $10_1/10_2$, $10_2/10_3$) mit der betreffenden Primärleitung;

k) an der Zufuhrleitung (8), stromaufwärts ($A_o$) des stromaufwärtigen Verbindungsknotens (N).

10. Verfahren nach Anspruch 8 oder 9, **dadurch gekennzeichnet, dass** der Schritt c) zur Veränderung des Drucks an dem Netzpunkt auf die folgende Weise durchgeführt wird:

c1) Anordnen eines Elektroventils mit proportionaler Steuerung an dem Netzpunkt;

c2) Messen (21) des Gasdrucks in der Nähe des dem Elektroventil stromabwärtigen Netzpunktes;

c3) Übermitteln (24a) der Messung des Gehaltes des bestimmten Elementes, der während des Schrittes a) erfasst wurde, zu einer Informationserfassungs- und verarbeitungseinheit (23), die in der Lage ist, entsprechend dem Gehalt und dem während des Schrittes b) durchgeführten Vergleich einen Druckeinstellwert Cp zu erzeugen;

c4) Übermitteln (24c) dieses Druckeinstellwertes Cp an ein Mittel (22), das in der Lage ist, einen Vergleich zwischen der Druckmessung und dem Einstellwert Cp durchzuführen und dementsprechend den Öffnungsgrad des Elektroventils (20) zu verändern, um den Druck, falls erforderlich, auf den Pegel des Einstellwertes Cp zurückzubringen.

11. Verfahren nach Anspruch 8 oder 9, **dadurch gekennzeichnet, dass** der Schritt c) zur Veränderung des Drucks an dem Netzpunkt auf die folgende Weise durchgeführt wird:

c1) die betreffende Leitung des Netzes (Primärleitung, Zufuhrleitung) ist auf Höhe des Netzpunktes in mindestens drei Abzweigungsleitungen ($30_1$, $30_2$, $30_3$) unterteilt, wobei jede dieser Abzweigungsleitungen mit einem Elektroventil ($31_1$, $31_2$, $31_3$) und einem vom Elektroventil stromabwärts angeordneten Druckreduzierventil ($32_1$, $32_2$, $32_3$) ausgestattet ist, wobei der stromabwärtige Teil jeder der Abzweigungsleitungen wiederum mit der betreffenden Leitung des Netzes verbunden ist;

c2) Voreinstellen von jedem der mindestens drei Druckreduzierventile auf einen festgelegten Druckpegel;

c3) Übermitteln der Messung des Gehaltes eines bestimmten Elementes, der während des Schrittes a) erfasst wurde, zu einer Informationserfassungs- und verarbeitungseinheit (33), die in der Lage ist, entsprechend dem Gehalt und dem während des Schrittes b) durchgeführten Vergleich wahlweise eines der Elektroventile zu öffnen, um den Durchgang des Gases nur durch die Abzweigungsleitung zu gestatten, deren Elektroventil somit geöffnet worden ist.

12. Verfahren nach Anspruch 11, **dadurch gekennzeichnet, dass** die voreingestellten Druckpegel in jeder der mindestens drei Abzweigungsleitungen jeweils den Folgenden entsprechen:

   - in einer ersten Abzweigungsleitung, einem Druckreduzierventil, das auf einen ersten Druckpegel $P_v$ voreingestellt ist, der einem dem Druckreduzierventil stromabwärtigen Gasdurchsatz entspricht, genannt Bereitstellungsdurchsatz $Q_v$;

   - in einer zweiten Abzweigungsleitung, einem Druckreduzierventil, das auf einen zweiten Druckpegel $P_{prod}$ voreingestellt ist, der einem dem Druckreduzierventil stromabwärtigen Gasdurchsatz entspricht, genannt Produktionsdurchsatz $Q_{prod}$;

   - in einer dritten Abzweigungsleitung, einem Druckreduzierventil, das auf einen dritten Druckpegel $P_{cond}$ voreingestellt ist, der einem dem Druckreduzierventil stromabwärtigen Gasdurchsatz entspricht, genannt Aufbereitungsdurchsatz $Q_{cond}$;

   wobei die jeweiligen Positionen der drei Durchsätze die Folgenden sind:

   $$Q_v < Q_{prod} < Q_{cond}.$$

13. Anwendung des Verfahrens zur Versorgung eines thermischen Behandlungsofens oder eines Lötofens oder eines Ofens oder Maschine zum Löten/ Verzinnen von elektronischen Komponenten mit Gas nach einem der Ansprüche 11 oder 12.

14. Anwendung nach Anspruch 13, **gekennzeichnet durch** die Durchführung der folgenden Phasen:

   - während einer ersten Anlaufphase des Ofens oder der Maschine wird das Gehäuse über das Versorgungsnetz mit Gas versorgt, wobei die Informationserfassungs- und verarbeitungseinheit das Elektroventil der Abzweigungsleitung geöffnet hat, deren Druckreduzierventil auf einen Druckpegel voreingestellt worden ist, der dem Aufbereitungsdurchsatz $Q_{cond}$ entspricht;

   - während einer vordefinierten Zeit $t_{cond}$ wird die Aufbereitungsphase aufrechterhalten;

   - nach der Aufbereitungszeit $t_{cond}$ schließt die Informationserfassungs- und verarbeitungseinheit das Elektroventil der Abzweigungsleitung, dessen voreingestellter Druckpegel dem Aufbereitungsdurchsatz $Q_{cond}$ entspricht, um das Elektroventil der Abzweigungsleitung zu öffnen, dessen voreingestellter Druckpegel dem Bereitstellungsdurchsatz $Q_v$ entspricht;

   - wenn in dem Gehäuse ein zu behandelndes Teil am Eingang des Gehäuses erfasst wird, schließt die Informationserfassungs- und verarbeitungseinheit das Elektroventil der Abzweigungsleitung, dessen voreingestellter Druckpegel dem Bereitstellungsdurchsatz $Q_v$ entspricht, um in die Produktionsphase überzugehen, indem das Elektroventil der Abzweigungsleitung geöffnet wird, dessen voreingestellter Druckpegel dem Produktionsdurchsatz $Q_{prod}$ entspricht;

   - wenn nach Ablauf einer vorbestimmten Zeit $t_{prod}$ kein neues zu behandelndes Teil am Eingang des Gehäuses erfasst wird, schließt die Informationserfassungs- und verarbeitungseinheit das Elektroventil der Abzweigungsleitung, dessen voreingestellter Druckpegel dem Produktionsdurchsatz $Q_{prod}$ entspricht, um in die Bereitstellungsphase zurückzugehen, indem das Elektroventil der Abzweigungsleitung geöffnet wird, dessen voreingestellter Druckpegel dem Bereitstellungsdurchsatz $Q_v$ entspricht.

15. Anwendung nach Anspruch 13 oder 14, **dadurch gekennzeichnet, dass** mindestens zwei der Sekundärleitungen des Netzes im Innern der heißen Zone des Ofens oder der Maschine einmünden und dass der Schritt c) zur Druckveränderung an einem Netzpunkt durchgeführt wird, der nur die mindestens zwei Sekundärleitungen des Netzes versorgt, die im Innern der heißen Zone des Ofens oder der Maschine einmünden.

16. Anwendung des Verfahrens zur Versorgung eines thermischen Behandlungsofens oder eines Lötofens oder eines Ofens oder Maschine zum Löten/ Verzinnen von elektronischen Komponenten mit Gas nach einem der Ansprüche 8 bis 10.

17. Anwendung nach Anspruch 16, **dadurch gekennzeichnet, dass** mindestens zwei der Sekundärleitungen des Netzes im Innern der heißen Zone des Ofens oder der Maschine einmünden und dass der Schritt c) zur Druckveränderung an einem Netzpunkt durchgeführt wird, der nur die mindestens zwei Sekundärleitungen versorgt, die im Innern der heißen Zone des Ofens oder der Maschine einmünden.

18. Vorrichtung zur Versorgung eines Gehäuses (3, 12) mit Gas, umfassend:

   - eine Quelle des Gases (5);

   - ein Netz zur Versorgung des Gehäuses mit Gas, das mindestens eine Primärleitung (1, 9, 10), die an ihrem stromaufwärtigen Teil mit der Quelle des Gases (5) verbunden ist, und mindestens zwei jeweilige Sekundärleitungen ($1_i$, $9_i$, $10_i$) umfasst, die an ihrem stromaufwärtigen Teil mit der Primärleitung verbunden sind und an ihrem stromabwärtigen Teil im Innern des Gehäuses einmünden, wobei die Primärleitungen alle von einem stromaufwärtigen Verbindungsknoten (N) ausgehen, der selbst durch eine Zufuhrleitung (8) mit dem Gas versorgt wird;

   - Mittel zum Messen des Gehaltes eines bestimmten Elementes in der Atmosphäre des Gehäuses an mindestens einem Punkt des Gehäuses;

   - Mittel (23, 33), um einen Vergleich des gemessenen Gehaltes mit mindestens einem Einstellwert, der für den Gehalt des Elementes in der Atmosphäre des Gehäuses an dem Punkt festgelegt ist, durchzuführen;

   - Mittel (22, 20, 33, $31_i$), um gegebenenfalls den Gasdruck auf Höhe eines der Punkte ($A_i$) des Netzes gemäß dem Ergebnis des Vergleiches der Gehalte zu verändern.

19. Vorrichtung nach Anspruch 18, **dadurch gekennzeichnet, dass** der Netzpunkt, an dem gegebenenfalls eine Druckveränderung durchgeführt wird, einer der folgenden Punkte ist:

   i) an der oder einer der Primärleitungen, stromaufwärts des Verbindungspunktes der ersten jeweiligen Sekundärleitung ($1_1$, $9_1$, $10_1$) mit der betreffenden Primärleitung;

   j) an der oder einer der Primärleitungen, zwischen den zwei Verbindungspunkten von zwei der jeweiligen Sekundärleitungen ($9_3/9_4$, $9_4/9_5$, $10_1/10_2$, $10_2/10_3$) mit der betreffenden Primärleitung;

   k) an der Zufuhrleitung (8), stromaufwärts des stromaufwärtigen Verbindungsknotens (N).

20. Vorrichtung nach Anspruch 18 oder 19, **dadurch gekennzeichnet, dass** sie Folgendes umfasst:

   c1) ein Elektroventil mit proportionaler Steuerung, das auf Höhe des Netzpunktes angeordnet ist;

   c2) Mittel (21) zum Messen des Gasdrucks in der Nähe des dem Elektroventil stromabwärtigen Netzpunktes;

   c3) eine Informationserfassungs- und verarbeitungseinheit (23), die in der Lage ist, entsprechend dem gemessenen Gehalt und dem Vergleich der Gehalte einen Druckeinstellwert Cp zu erzeugen;

   c4) ein Mittel (22), das in der Lage ist, einen Vergleich zwischen der Druckmessung und dem Einstellwert Cp durchzuführen und dementsprechend den Öffnungsgrad des Elektroventils (20) zu verändern, um den Druck, falls erforderlich, auf den Pegel des Einstellwertes Cp zurückzubringen.

21. Vorrichtung nach Anspruch 18 oder 19, **dadurch gekennzeichnet, dass**

   - sich die betreffende Leitung des Netzes, wo sich der Punkt befindet, an diesem Punkt in mindestens drei Abzweigungsleitungen ($30_1$, $30_2$, $30_3$) unterteilt, wobei jede dieser Abzweigungsleitungen mit einem Elektroventil ($31_1$, $31_2$, $31_3$) und einem vom Elektroventil stromabwärts angeordneten Druckreduzierventil ($32_1$, $32_2$, $32_3$) ausgestattet ist, wobei der stromabwärtige Teil jeder der Abzweigungsleitungen wiederum mit der betreffenden Leitung des Netzes verbunden ist; und dass sie Folgendes umfasst:

     - eine Informationserfassungs- und verarbeitungseinheit (33), die in der Lage ist, entsprechend dem gemessenen Gehalt und dem Vergleich der Gehalte wahlweise eines der Elektroventile zu öffnen, um den Durchgang des Gases nur durch die Abzweigungsleitung zu gestatten, deren Elektroventil somit geöffnet worden ist.

22. Vorrichtung nach einem der Ansprüche 18 bis 21, **dadurch gekennzeichnet, dass** alle oder Teile der Sekundärleitungen mit einem Mittel zum Erzeugen eines Druckverlustes (7) versehen sind.

23. Vorrichtung nach Anspruch 22, **dadurch gekennzeichnet, dass** das Mittel zum Erzeugen eines Druckverlustes aus einem der folgenden Mittel besteht:

- einer kalibrierte Drossel,

- einem Drosselventil

- einem Absperrventil,

- einer Gasindex,

- einer Rohrleitungskonfiguration, die in der Leitung verwendet wird,

- einer Konfiguration der Düse zum Einspritzen von Gas in den Ofen, die sich am stromabwärtigen Ende der betreffenden Leitung befindet.

**Claims**

1. Method of regulating the content of a given component of the atmosphere in a chamber (3, 12), the chamber being supplied by a supply network which includes at least one primary line (1, 9, 10) connected in its upstream part to a gas supply (5), and at least two respective secondary lines ($1_i$, $9_i$, $10_i$) connected in their upstream part to the primary line and emerging in their downstream part in the chamber, the primary lines coming from an upstream node (N) which is itself supplied with the said gas via a feed pipe (8), **characterized by** the implementation of the following steps:

   a) the content of the given component of the atmosphere in the chamber is measured at at least one point in the chamber;
   b) the measured content is compared with at least one predetermined control value for the content of the said component of the atmosphere in the chamber at the said point; and
   c) where necessary, the pressure of the gas at one of the points ($A_i$) in the said network is varied, depending on the result of the comparison at step b).

2. Regulating method according to Claim 1, **characterized in that** the pressure of the gas at one of the following points ($A_i$) in the said network is varied:

   i) on the primary line or one of the primary lines, upstream of the point of connection of the first respective secondary line ($1_1$, $9_1$, $10_1$) to the relevant primary line ($A_1$, $A_4$);
   j) on the primary line or one of the primary lines, between the two points of connection of two of the said respective secondary lines ($9_3/9_4$, $9_4/9_5$, $10_1/10_2$, $10_2/10_3$) to the relevant primary line; and

k) on the feed pipe (8) upstream ($A_0$) of the said upstream node (N).

3. Method according to Claim 1 or 2, **characterized in that** step c) of varying the pressure at the said point in the network is carried out in the following manner:

   c1) a solenoid valve with proportional control is placed at the said point in the network;
   c2) the pressure of the gas near the said point in the network is measured (21) downstream of the solenoid valve;
   c3) the said measurement of the content of the given component, obtained during step a), is transmitted (24a) to a data acquisition and processing unit (23) capable, depending on the said content and on the comparison made during step b), of generating a pressure control value Cp; and
   c4) this pressure control value Cp is transmitted (24c) to a means (22) capable of comparing the said pressure measurement with the said control value Cp and of accordingly modifying the amount by which the solenoid valve (20) is open in order, where necessary, to bring the said pressure back to the level of the control value Cp.

4. Method according to one of Claims 1 to 3, **characterized in that** the said component, the content of which in the atmosphere in the chamber is measured during step a), is oxygen.

5. Method according to Claim 1 or 2, **characterized in that** step c) of varying the pressure at the said point in the network is carried out in the following manner:

   c1) the relevant line of the network (primary line and feed pipe) is subdivided at the said point in the network into at least three bypass lines ($30_1$, $30_2$, $30_3$), each of these bypass lines being equipped with a solenoid valve ($31_1$, $31_2$, $31_3$) and with a pressure-reducing valve ($32_1$, $32_2$, $32_3$) lying downstream of the solenoid valve, the downstream end of each of the bypass lines being connected again to the relevant line of the network;
   c2) each of the at least three pressure-reducing valves is preset to a predetermined pressure level; and
   c3) the said measurement of the content of the given component, obtained during step a), is transmitted to a data acquisition and processing unit (33) capable, depending on the said content and on the comparison made during step b), of selectively opening one of the said solenoid valves in order to allow passage of the gas only into the bypass line whose solenoid valve has thus been opened.

6. Method according to Claim 5, **characterized in that** the said given component, the content of which in the atmosphere in the chamber is measured during step a), is oxygen.

7. Method according to either of Claims 5 and 6, **characterized in that** the said preset pressure levels in each of the at least three bypass lines correspond respectively:

   - in a first bypass line, to a pressure-reducing valve preset to a first pressure level $P_s$ corresponding to a gas flow rate, downstream of the pressure-reducing valve, called the standby flow rate $Q_s$;
   - in a second bypass line, to a pressure-reducing valve preset to a second pressure level $P_{prod}$ corresponding to a gas flow rate, downstream of the pressure-reducing valve, called the production flow rate $Q_{prod}$; and
   - in a third bypass line, to a pressure-reducing valve preset to a third pressure level $P_{fill}$ corresponding to a gas flow rate, downstream of the pressure-reducing valve, called the filling flow rate $Q_{fill}$;

   the respective position of the three flow rates being as follows:

   $$Q_s < Q_{prod} < Q_{fill}.$$

8. Process for supplying a chamber (3, 12) with gas, in which the chamber is supplied by a supply network which includes at least one primary line (1, 9, 10) connected in its upstream part to a supply (5) of the said gas, and at least two respective secondary lines ($1_i$, $9_i$, $10_i$) connected in their upstream part to the primary line and emerging in their downstream part in the chamber, the primary lines coming from an upstream node (N) which is itself supplied with the said gas via a feed pipe (8), **characterized by** the implementation of the following steps:

   a) the content of a given component of the atmosphere in the chamber is measured at at least one point in the chamber;
   b) the measured content is compared with at least one predetermined control value for the content of the said component of the atmosphere in the chamber at the said point; and
   c) where necessary, the pressure of the gas at one of the points ($A_i$) in the said network is varied, depending on the result of the comparison at step b).

9. Process according to Claim 8, **characterized in that** the pressure of the gas at one of the following points ($A_i$) in the network is varied:

   i) on the primary line or one of the primary lines, upstream of the point of connection of the first respective secondary line ($1_1$, $9_1$, $10_1$) to the relevant primary line (A1, A4);
   j) on the primary line or one of the primary lines, between the two points of connection of two of the said respective secondary lines ($9_3/9_4$, $9_4/9_5$, $10_1/10_2$, $10_2/10_3$) to the relevant primary line; and
   k) on the feed pipe (8) upstream ($A_0$) of the said upstream node (N).

10. Process according to Claim 8 or 9, **characterized in that** step c) of varying the pressure at the said point in the network is carried out in the following manner:

   c1) a solenoid valve with proportional control is placed at the said point in the network;
   c2) the pressure of the gas near the said point in the network is measured (21) downstream of the solenoid valve;
   c3) the said measurement of the content of the given component, obtained during step a), is transmitted (24a) to a data acquisition and processing unit (23) capable, depending on the said content and on the comparison made during step b), of generating a pressure control value Cp; and
   c4) this pressure control value Cp is transmitted (24c) to a means (22) capable of comparing the said pressure measurement with the said control value Cp and of accordingly modifying the amount by which the solenoid valve (20) is open in order, if necessary, to bring the said pressure back to the level of the control value Cp.

11. Process according to Claim 8 or 9, **characterized in that** step c) of varying the pressure at the said point in the network is carried out in the following manner:

   c1) the relevant line of the network (primary line and feed pipe) is subdivided at the said point in the network into at least three bypass lines ($30_1$, $30_2$, $30_3$), each of these bypass lines being equipped with a solenoid valve ($31_1$, $31_2$, $31_3$) and with a pressure-reducing valve ($32_1$, $32_2$, $32_3$) lying downstream of the solenoid valve, the downstream end of each of the bypass lines being connected again to the relevant line of the network;

c2) each of the at least three pressure-reducing valves is preset to a predetermined pressure level; and

c3) the said measurement of the content of the given component, obtained during step a), is transferred to a data acquisition and processing unit (33) capable, depending on the said content and on the comparison made during step b), of selectively opening one of the said solenoid valves in order to allow passage of the gas only into the bypass line whose solenoid valve has thus been opened.

12. Process according to Claim 11, **characterized in that** the said preset pressure levels in each of the at least three bypass lines correspond respectively:

- in a first bypass line, to a pressure-reducing valve preset to a first pressure level $P_s$ corresponding to a gas flow rate, downstream of the pressure-reducing valve, called the standby flow rate $Q_s$;
- in a second bypass line, to a pressure-reducing valve preset to a second pressure level. $P_{prod}$ corresponding to a gas flow rate, downstream of the pressure-reducing valve, called the production flow rate $Q_{prod}$; and
- in a third bypass line, to a pressure-reducing valve preset to a third pressure level $P_{fill}$ corresponding to a gas flow rate, downstream of the pressure-reducing valve, called the filling flow rate $Q_{fill}$;

the respective position of the three flow rates being as follows:

$$Q_s < Q_{prod} < Q_{fill}.$$

13. Application of the process according to either of Claims 11 and 12 for the supply of gas to a heat-treatment oven or to a soldering oven or to an oven or machine for the soldering/tinning of electronic components.

14. Application according to Claim 13, **characterized by** the implementation of the following phases:

- during a first phase, of starting up the oven or the machine, the chamber is supplied with gas via the said supply network, the said data acquisition and processing unit having opened the solenoid valve of the bypass line whose pressure-reducing valve has been preset to a pressure level corresponding to the filling flow rate $Q_{fill}$;

- the filling phase is maintained for a predefined time $t_{fill}$;
- after the filling time $t_{fill}$, the said data acquisition and processing unit closes the solenoid valve of the bypass line whose preset pressure level corresponds to the filling flow rate $Q_{fill}$ in order to open the solenoid valve of the bypass line whose preset pressure level corresponds to the standby flow rate $Q_s$;
- when a component to be treated in the chamber is detected at the entrance of the chamber, the said data acquisition and processing unit closes the solenoid valve of the bypass line whose preset pressure level corresponds to the standby flow rate $Q_s$ in order to switch to the production phase by opening the solenoid valve of the bypass line whose preset pressure level corresponds to the production flow rate $Q_{prod}$; and
- if after a predetermined time $t_{prod}$ a new piece to be treated has not been detected at the entrance of the chamber, the said data acquisition and processing unit closes the solenoid valve of the bypass line whose preset pressure level corresponds to the production flow rate $Q_{prod}$ in order to switch back to the standby phase by opening the solenoid valve of the bypass line whose preset pressure level corresponds to the standby flow rate $Q_s$.

15. Application according to Claim 13 or 14, **characterized in that** at least two of the secondary lines of the said network emerge in the hot zone of the oven or of the machine and **in that** of said step c) the varying the pressure at a point in the network which supplies only the said at least two secondary lines of the network emerging in the hot zone of the oven or of the machine, is carried out.

16. Application of the process according to one of Claims 8 to 10 for the supply of gas to a heat-treatment oven or to a soldering oven, or to an oven or machine for soldering/tinning electronic components.

17. Application according to Claim 16, **characterized in that** at least two of the secondary lines of the said network emerge in the hot zone of the oven or of the machine and **in that** the said step c) of varying the pressure at a point in the network which supplies only the said at least two secondary lines emerging in the hot zone of the oven or of the machine is carried out.

18. Plant for supplying a chamber (3, 12) with gas, which includes:

- a supply (5) of the said gas;
- a network for supplying the chamber with gas, which includes at least one primary line (1, 9, 10) connected in its upstream part to the said gas supply (5) and at least two respective secondary lines ($1_i$, $9_i$, $10_i$) connected in their upstream part to the primary line and emerging in their downstream part in the chamber, the primary lines all coming from an upstream node (N) which is itself supplied with the said gas via a feed pipe (8);

- means for measuring the content of a given component of the atmosphere in the chamber at at least one point in the chamber;
- means (23, 33) for comparing the measured content with at least one predetermined control value for the content of the said component of the atmosphere in the chamber at the said point; and
- means (22, 20, 33, $31_i$) for varying the pressure of the gas at one of the points ($A_i$) in the said network, where necessary, depending on the result of the said comparison of the contents.

19. Plant according to Claim 18, **characterized in that** the said point in the network where, where necessary, the pressure is varied, is one of the following points:

> i) on the primary line or one of the primary lines, upstream of the point of connection of the first respective secondary line ($1_1$, $9_1$, $10_1$) to the relevant primary line;
> j) on the primary line or one of the primary lines, between the two points of connection of two of the said respective secondary lines ($9_3/9_4$, $9_4/9_5$, $10_1/10_2$, $10_2/10_3$) to the relevant primary line; and
> k) on the feed pipe (8) upstream of the said upstream node (N).

20. Plant according to Claim 18 or 19, **characterized in that** it comprises:

> c1) a solenoid valve with proportional control located at the said point in the network;
> c2) means (21) for measuring the pressure of the gas near the said point in the network, downstream of the solenoid valve;
> c3) a data acquisition and processing unit (23) capable, depending on the said measured content and on the said comparison of contents, of generating a pressure control value Cp; and
> c4) a means (22) capable of comparing the said pressure measurement with the said control value Cp and of accordingly modifying the amount by which the solenoid valve (20) is open in order, where necessary, to bring the said pressure back to the level of the control value Cp.

21. Plant according to Claim 18 or 19, **characterized in that**:

- the relevant line of the network where the said point lies is subdivided at this point into at least three bypass lines ($30_1$, $30_2$, $30_3$), each of these bypass lines being equipped with a solenoid valve ($31_1$, $31_2$, $31_3$) and with a pressure-reducing valve ($32_1$, $32_2$, $32_3$) lying downstream of the solenoid valve, the downstream end of each of the bypass lines being connected again to the relevant line of the network; and **in that** it comprises
- a data acquisition and processing unit (33) capable, depending on the said measured value and on the said comparison of contents, of selectively opening one of the said solenoid valves in order to allow passage of the gas only into the bypass line whose solenoid valve has thus been opened.

22. Plant according to one of Claims 18 to 21, **characterized in that** all or part of the said secondary lines is or are provided with a means for creating a pressure drop (7).

23. Plant according to Claim 22, **characterized in that** the said means for creating a pressure drop consists of one of the following means:

- a calibrated restriction;
- a throttling valve;
- a shut-off valve;
- a gas panel;
- the configuration of pipework used in the line; and
- a configuration of a nozzle for injecting gas into the oven, lying on the downstream end of the relevant line.

FIG.1

FIG.2

FIG.3

FIG.4

24